# EUROPEAN PATENT APPLICATION

(11) **EP 4 480 670 A1**
(43) Date of publication of application: **25.12.2024**
(21) Application number: 23756388.7
(22) Date of filing: 15.02.2023
(51) Int. Cl.: B29C 49/64, B29B 11/08, B29C 49/06, B29C 49/18, B29C 49/48

(54) **TEMPERATURE ADJUSTMENT MOLD, TEMPERATURE ADJUSTMENT METHOD, AND RESIN CONTAINER MANUFACTURING DEVICE**

(30) Priority: 16.02.2022 JP 2022021982
(71) Applicant: Nissei ASB Machine Co., Ltd., Komoro-shi, Nagano 384-8585 (JP)
(72) Inventor: KOMIYAMA Tomokazu, Komoro-shi, Nagano 384-8585 (JP); NAGASAKI Atsushi, Komoro-shi, Nagano 384-8585 (JP)
(74) Representative: Mewburn Ellis LLP
(86) International application number: PCT/JP2023/005157
(87) International publication number: WO 2023/157863

(57) **Abstract**

A temperature adjustment mold for adjusting a temperature of an injection-molded bottomed resin preform includes: a first mold that accommodates the preform inside and is in contact with an outer peripheral surface of the preform; a second mold that is inserted into the preform and is in close contact with a neck portion of the preform; and a third mold that is inserted into the preform integrally with the second mold and receives a bottom portion of the preform on a mold surface. The third mold has an opening for introducing compressed air into the preform. When the third mold is inserted into the preform, a distance from the mold surface of the third mold to the first mold is larger than the thickness of the preform.

## Description

### Technical Field

The present invention relates to a temperature adjustment mold, a temperature adjustment method, and a resin container manufacturing apparatus.

### Background Art

Conventionally, a hot parison type blow molding apparatus has been known as one of resin container manufacturing apparatuses. The hot parison type blow molding apparatus is configured to blow-mold a resin container using residual heat from injection molding of a preform, and is advantageous in that it is possible to manufacture a resin container that is diversified and excellent in aesthetic appearance as compared with a cold parison type.

In order to shorten a hot parison type molding cycle, for example, it has also been proposed to shorten an injection molding time of a preform (a cooling time of the preform in an injection mold), which is a rate-determining step, and to additionally cool the high temperature preform in a temperature adjustment step after the injection molding.

As a method for additionally cooling the preform, a method is also known in which an outer peripheral surface of the preform is brought into contact with a cooling mold in a temperature adjustment step to perform heat exchange, and compressed air is caused to flow into the preform to cool the preform (see Patent Literatures 1 to 3).

### Citation List

### Patent Literature

Patent Literature 1: JP 6505344 B2
Patent Literature 2: WO 2020/158918 A
Patent Literature 3: JP 2509042 B2

### Summary of Invention

### Technical Problem

In this type of additional cooling of the preform, cooling and adjustment of temperature distribution in the temperature adjustment step may be insufficient.

Therefore, the present invention has been made in view of such problems, and an object of the present invention is to provide a temperature adjustment mold capable of favorably performing cooling and adjustment of temperature distribution on a preform using contraction of the preform when air cooling is performed in a temperature adjustment step.

### Solution to Problem

One aspect of the present invention is a temperature adjustment mold for adjusting the temperature of an injection-molded bottomed resin preform. The temperature adjustment mold includes: a first mold that accommodates the preform inside and is in contact with an outer peripheral surface of the preform; a second mold that is inserted into the preform and is in close contact with a neck portion of the preform; and a third mold that is inserted into the preform integrally with the second mold and receives a bottom portion of the preform on a mold surface. The third mold has an opening for introducing compressed air into the preform. When the third mold is inserted into the preform, a distance from the mold surface of the third mold to the first mold is larger than the thickness of the preform.

### Advantageous Effects of Invention

According to one aspect of the present invention, it is possible to provide a temperature adjustment mold capable of favorably performing cooling and adjustment of temperature distribution on a preform using contraction of the preform when air cooling is performed in a temperature adjustment step.

### Brief Description of Drawings

Fig. 1 is a diagram schematically illustrating a configuration of a blow molding apparatus of the present embodiment.
Fig. 2 is a diagram illustrating a configuration example of a temperature adjustment unit.
Fig. 3 is a diagram illustrating a state in which compressed air is introduced into a preform from Fig. 2.
Fig. 4 is a flowchart indicating steps of a blow molding method.

### Description of Embodiments

Hereinafter, an embodiment of the present invention will be described with reference to the drawings.

In the embodiment, for easy understanding, structures and elements of parts other than a main part of the present invention will be described in a simplified or omitted manner. In the drawings, the same elements are denoted by the same reference numerals. Note that the shapes, dimensions, and the like of elements illustrated in the drawings are schematically illustrated, and do not indicate actual shapes, dimensions, and the like.

### (Description of blow molding apparatus)

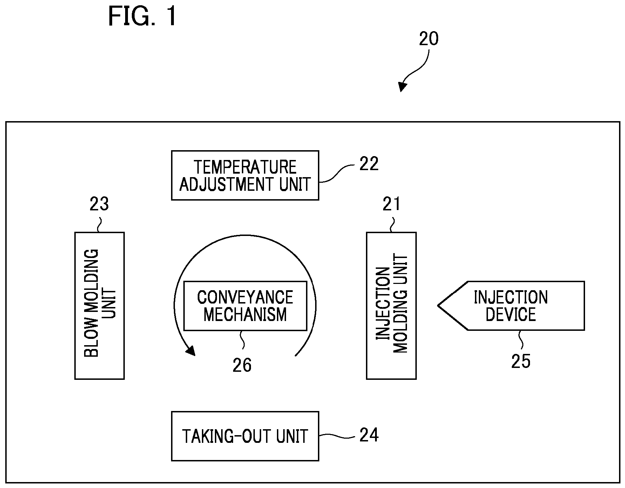

Fig. 1 is a diagram schematically illustrating a configuration of a blow molding apparatus 20 of the present embodiment. The blow molding apparatus 20 of the present embodiment is a hot parison type (also referred to as one stage type) apparatus that blow-molds a container by utilizing residual heat (internal heat quantity) from injection molding without cooling a preform to room temperature.

The blow molding apparatus 20 includes an injection molding unit 21, a temperature adjustment unit 22, a blow molding unit 23, a taking-out unit 24, and a conveyance mechanism 26. The injection molding unit 21, the temperature adjustment unit 22, the blow molding unit 23, and the taking-out unit 24 are disposed at positions in which one position is obtained by rotation of an adjacent position by a predetermined angle (for example, 90 degrees) around the conveyance mechanism 26.

The conveyance mechanism 26 includes a transfer plate 28 (not illustrated in Fig. 1) that moves so as to rotate around an axis in a direction perpendicular to a paper surface of Fig. 1. On the transfer plate 28, one or more neck molds 27 (not illustrated in Fig. 1) that hold a neck portion 11 of a preform 10 or a container are disposed at each predetermined angle. The conveyance mechanism 26 conveys the preform 10 (or the container) having the neck portion 11 held by the neck mold 27 in order of the injection molding unit 21, the temperature adjustment unit 22, the blow molding unit 23, and the taking-out unit 24 by moving the transfer plate 28 by 90 degrees each time. Note that the conveyance mechanism 26 further includes a mold opening mechanism of the neck mold 27 and the like.

### (Injection molding unit 21)

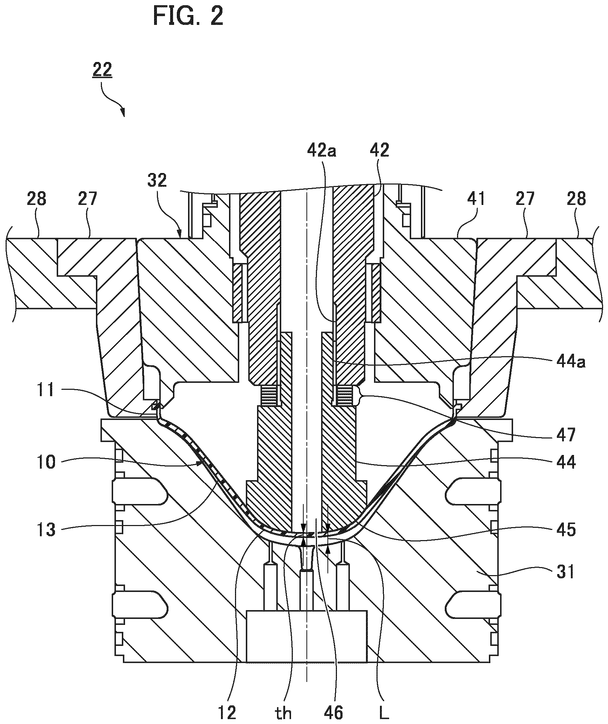

The injection molding unit 21 includes an injection cavity mold and an injection core mold (which are not illustrated), and manufactures the preform 10 illustrated in Fig. 2 described later. An injection device 25 that supplies a molten resin material, which is a raw material of the preform 10, is connected to the injection molding unit 21.

In the injection molding unit 21, the injection cavity mold, the injection core mold, and the neck mold 27 of the conveyance mechanism 26 are closed to form a preform-shaped mold space. Then, the molten resin material is poured from the injection device 25 into the mold space having such a preform shape, whereby the preform 10 is manufactured by the injection molding unit 21.

Here, the overall shape of the preform 10 is a bottomed bowl shape protruding downward as illustrated in Fig. 2. The cylindrical neck portion 11 opening upward is formed on an upper side of the preform 10, and a bottom portion 12 faces a lower side of the preform 10. The neck portion 11 and the bottom portion 12 are connected to each other by a body portion 13. Note that, in the preform 10, for example, a ratio of the diameter of the neck portion 11 to the entire length of the preform 10 may be 0.5 or more and 4.0 or less (preferably 1.0 or more and 3.0 or less, and more preferably 1.1 or more and 1.5 or less), and the body portion 13 may have a substantially conical shape. In addition, in the preform 10, the diameter of the neck portion 11 may be 40 mm or more and 150 mm or less (preferably 60 mm or more and 130 mm or less, and more preferably 80 mm or more and 110 mm or less), and the length of the body portion 13 may be shorter than that of the neck portion 11.

Note that the above-described shape of the preform 10 is merely an example, and for example, the preform 10 may have a bottomed cylindrical shape extending in a longitudinal direction.

A material of each of the container and the preform 10 is a thermoplastic synthetic resin, and can be appropriately selected according to use of the container. Specific examples of the type of the material include PET (polyethylene terephthalate), PEN (polyethylene naphthalate), PCTA (polycyclohexanedimethylene terephthalate), Tritan (registered trademark, co-polyester manufactured by Eastman Chemical Co., Ltd.), PP (polypropylene), PE (polyethylene), PC (polycarbonate), PES (polyethersulfone), PPSU (polyphenylsulfone), PS (polystyrene), COP/COC (cyclic olefin-based polymer), PMMA (polymethyl methacrylate: acrylic), and PLA (polylactic acid).

Note that even when a mold of the injection molding unit 21 is opened, the neck mold 27 of the conveyance mechanism 26 is conveyed while holding the preform 10 as it is without being opened. The number of the preforms 10 simultaneously molded by the injection molding unit 21 (that is, the number of containers that can be simultaneously molded by the blow molding apparatus 20) can be appropriately set.

### (Temperature adjustment unit 22)

The temperature adjustment unit 22 performs temperature equalization and removal of uneven temperature of the preform 10 manufactured by the injection molding unit 21, and adjusts the temperature of the preform 10 so as to have a temperature suitable for blow molding (for example, about 90°C to 105°C) and temperature distribution suitable for a container shape to be shaped. The temperature adjustment unit 22 also has a function of cooling the preform 10 (specifically, the body portion 13 and the bottom portion 12) in a high temperature state after injection molding.

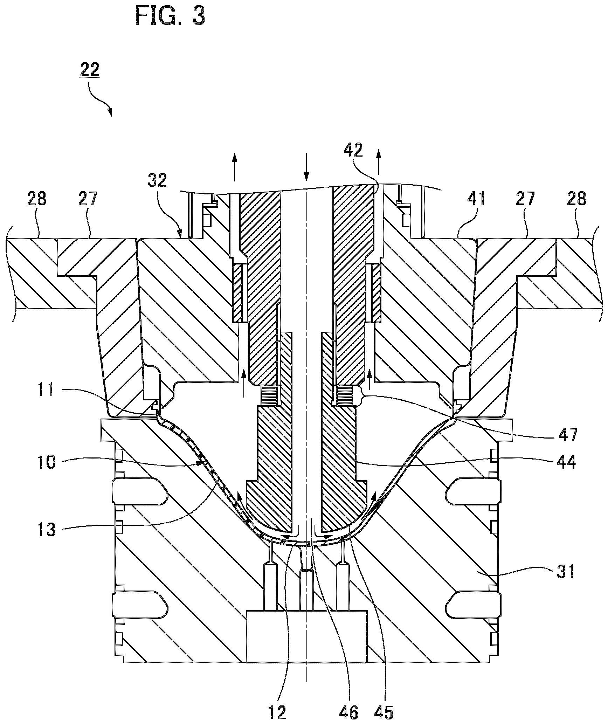

Figs. 2 and 3 are diagrams illustrating configuration examples of the temperature adjustment unit 22. As an example of a temperature adjustment mold, the temperature adjustment unit 22 illustrated in Figs. 2 and 3 includes a cavity mold (temperature adjustment pot) 31 capable of accommodating the preform 10 (specifically, the body portion 13 and the bottom portion 12), and a temperature adjustment core mold 32.

The cavity mold 31 is an example of a first mold, and is a mold having a temperature adjustment space having substantially the same shape as the preform 10 manufactured by the injection molding unit 21. A mold surface of the cavity mold 31 has a bottomed bowl shape protruding downward, and is in contact with an outer peripheral surface of the preform 10 (specifically, the body portion 13 and the bottom portion 12). A flow path (not illustrated) through which a temperature adjustment medium (refrigerant) flows is formed inside the cavity mold 31 illustrated in Figs. 2 and 3. Therefore, the temperature of the cavity mold 31 is maintained at a predetermined temperature by the temperature adjustment medium.

Note that the temperature of the temperature adjustment medium of the cavity mold 31 is not particularly limited, but can be appropriately selected within a range of, for example, 5°C to 80°C, preferably 30°C to 60°C.

The temperature adjustment core mold 32 includes a fitting core 41 and an air introduction member 42, and is inserted into the neck mold 27 and the preform 10. The temperature adjustment core mold 32 is airtightly brought into contact with the neck portion 11 of the preform 10 in a state of being inserted into the neck mold 27.

The fitting core 41 and the air introduction member 42 are both hollow cylindrical bodies, and the air introduction member 42 is concentrically disposed inside the fitting core 41.

The fitting core 41 is an example of a second mold, and has a function of maintaining airtightness with the preform 10 by being in close contact with an inner periphery or an upper end surface of the neck portion 11 when the temperature adjustment core mold 32 is inserted into the neck mold 27. A flow path that exhausts air from the inside of the preform 10 is formed in an axial direction between the fitting core 41 and the air introduction member 42.

The air introduction member 42 is fixed to the fitting core 41 and includes a flow path that supplies compressed air (air and a gaseous refrigerant) to the preform 10. A female screw thread 42a is formed on an inner periphery of a distal end of the air introduction member 42, and a distal end core 44 is detachably attached thereto. The distal end of the air introduction member 42 is an example of a base portion.

The distal end core 44 is an example of a third mold, and is a mold component attached to a distal end side of the air introduction member 42. The distal end core 44 has a curved surface portion 45, which is a mold surface having a shape corresponding to an inner peripheral side shape of the preform 10, on a distal end side. The curved surface portion 45 of the distal end core 44 faces the bottom portion 12 of the preform 10 and receives an inner peripheral side bottom surface of the preform 10 to be contracted. In addition, the distal end core 44 has an opening 46 that penetrates the member in an axial direction from a center of the curved surface portion 45 and communicates with the flow path of the air introduction member 42.

Here, the distal end core 44 is preferably formed of a material having high thermal conductivity, such as aluminum or an aluminum alloy. A surface of the curved surface portion 45 may be roughened such that the preform 10 is hardly stuck to the curved surface portion 45. The roughness (arithmetic average roughness Ra) of the surface of the curved surface portion 45 is set, for example, in a range of 0.6 um to 1.0 µm.

A male screw thread 44a is formed on an upper end side of the distal end core 44. By screwing the male screw thread 44a of the distal end core 44 with the female screw thread 42a of the air introduction member 42, the distal end core 44 is attached to the air introduction member 42. As a result, the distal end core 44 moves integrally with the fitting core 41 and the air introduction member 42.

A spacer 47 that positions the position of the curved surface portion 45 in an axial direction is disposed between the air introduction member 42 and the distal end core 44. For example, the spacer 47 is a ring-shaped shim plate into which the male screw thread 44a of the distal end core 44 can be inserted, and the position of the curved surface portion 45 in the axial direction can be adjusted by adjusting the number of spacers 47 sandwiched between the air introduction member 42 and the distal end core 44. Note that the shape and the like of the spacer 47 are not limited to the above, and the spacer 47 may be replaced with a plurality of types of spacers 47 having different thicknesses. Alternatively, the spacer 47 may have a columnar structure in which the spacer 47 are disposed at intervals in a circumferential direction, a washer, or the like.

In a state where the temperature adjustment core mold 32 is inserted into the preform 10 (specifically, a recessed space formed by the body portion 13 and an inner surface of the bottom portion 12), a distance L between the curved surface portion 45 and a mold surface of the cavity mold 31 is larger than a thickness th of the bottom portion 12 of the preform 10 (L > th). As a result, in a state where the temperature adjustment core mold 32 is inserted into the preform 10, as illustrated in Fig. 3, a gap through which compressed air flows can be ensured between the curved surface portion 45 and the bottom portion 12 of the preform 10.

### (Blow molding unit 23)

Returning to Fig. 1, the blow molding unit 23 performs stretch blow molding on the preform 10 whose temperature has been adjusted by the temperature adjustment unit 22 to manufacture a container.

The blow molding unit 23 includes a blow cavity mold which is a pair of split molds corresponding to the shape of the container, a bottom mold, a stretching rod, and an air introduction member (a blow core mold, none of which is illustrated). The blow molding unit 23 blow-molds the preform 10 while stretching the preform. The body portion 13 and the bottom portion 12 of the preform 10 stretched in a biaxial directions (a longitudinal axis direction and a lateral axis direction) reduce residual heat due to thinning, and the thinned body portion 13 and bottom portion 12 are cooled by contact with the blow cavity mold and solidified in the shape of the container. As a result, the preform 10 is shaped into a blow cavity mold shape, and the container can be manufactured.

### (Taking-out unit 24)

The taking-out unit 24 is configured to release a neck portion of the container manufactured by the blow molding unit 23 from the neck mold 27 and to take out the container to the outside of the blow molding apparatus 20.

### (Description of blow molding method)

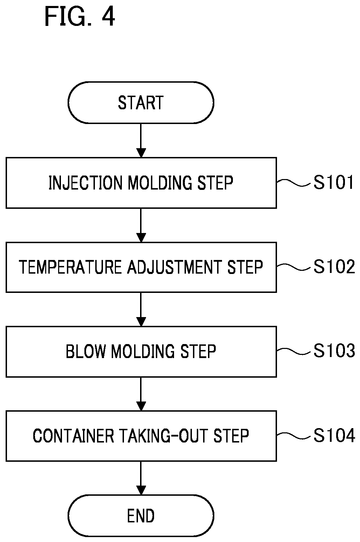

Next, a blow molding method with the blow molding apparatus of the present embodiment will be described. Fig. 4 is a flowchart indicating steps of the blow molding method.

### (Step S101: Injection molding step)

First, in the injection molding unit 21, a molten resin is injected from the injection device 25 into a preform-shaped mold space formed by the injection cavity mold, the injection core mold, and the neck mold 27 of the conveyance mechanism 26, whereby the preform 10 is manufactured.

Then, the injection mold of the injection molding unit 21 is opened after completion of injection (filling and pressure holding) of the resin material or after a minimum cooling time provided after the completion of the injection.

It is preferable to perform mold opening without providing a cooling time of the preform 10 in the injection mold after the completion of the injection (filling and pressure holding) of the resin material in step S101 from a viewpoint of manufacturing the container by a high-speed molding cycle.

Meanwhile, when the preform 10 is minimally cooled in the injection mold, a time (cooling time) for cooling the resin material after the completion of the injection of the resin material by the injection molding unit 21 is preferably 1/2 or less of a time (injection time) for injecting the resin material. The cooling time can be made shorter with respect to the time for injecting the resin material depending on the weight of the resin material and the like. For example, the cooling time is more preferably 2/5 or less, still more preferably 1/4 or less, and particularly preferably 1/5 or less with respect to the injection time of the resin material.

In the present embodiment, there is no time for cooling the preform 10 in the injection mold (or the cooling time is very short). Therefore, a skin layer of the preform (a surface layer in which the resin material is cooled and solidified) is formed to be thinner, and a core layer (an inner layer in which the resin material is not sufficiently cooled and softened or melted) is formed to be thicker than those in a case where the preform is sufficiently cooled in the injection mold. That is, in the present embodiment, the preform 10 having a large thermal gradient between the skin layer and the core layer and having high residual heat at a high temperature is formed.

When the injection mold is opened in step S101, the preform 10 is released from the injection cavity mold and the injection core mold in a high temperature state in which an outer shape can be maintained. Thereafter, the transfer plate 28 of the conveyance mechanism 26 moves so as to rotate by a predetermined angle, and the preform 10 in the high temperature state held by the neck mold 27 is conveyed to the temperature adjustment unit 22.

### (Step S102: Temperature adjustment step)

Next, in the temperature adjustment unit 22, cooling and temperature adjustment for bringing the temperature of the preform 10 close to a temperature (blow temperature) suitable for final blow are performed.

In the temperature adjustment unit 22, the temperature of the preform 10 is lowered to the blow temperature, and then the temperature of the preform 10 is maintained at the blow temperature until blow molding is performed. By rapidly cooling the preform at a high temperature by the temperature adjustment unit 22, whitening (cloudiness) due to spherulite generation crystallization that may occur when a preform formed of a crystalline resin material (for example, PET) is slowly cooled is suppressed.

In the temperature adjustment unit 22, first, the preform 10 is accommodated in the cavity mold 31. Subsequently, the temperature adjustment core mold 32 is inserted into the neck portion 11 of the preform 10 accommodated in the cavity mold 31. At this time, the neck portion 11 of the preform 10 and the fitting core 41 are brought into close contact with each other to maintain airtightness therebetween. The distal end core 44 of the temperature adjustment core mold 32 is inserted into the preform 10, and the curved surface portion 45 of the distal end core 44 faces the bottom portion 12 of the preform 10.

Here, the preform 10 conveyed to the temperature adjustment unit 22 has a high temperature. Therefore, the preform 10 is cooled, contracted, and deformed even in a short time until cooling blow described later is performed (for example, a time required for conveyance of the injection molding unit to the temperature adjustment unit immediately after release of the injection molding unit). Specifically, by contraction of the body portion 13 and the bottom portion 12, the preform 10 is deformed such that the bottom portion 12 is lifted inward. Then, as illustrated in Fig. 2, the preform 10 comes into contact with the curved surface portion 45 of the distal end core 44, and the bottom portion 12 of the preform 10 comes into close contact with (abuts on) the curved surface portion 45.

By the close contact between the bottom portion 12 of the preform 10 and the curved surface portion 45, heat exchange is performed between the bottom portion 12 of the preform 10 and the distal end core 44, and the bottom portion 12 of the preform 10 is effectively cooled before the cooling blow is performed. In addition, by the close contact between the bottom portion 12 of the preform 10 and the curved surface portion 45, the bottom portion 12 of the preform 10 may be held in a shape following the curved surface portion 45. As a result, it is possible to suppress the preform 10 from being irregularly contracted before the cooling blow.

Thereafter, the cooling blow of the preform 10 is performed. In the cooling blow of the present embodiment, as illustrated in Fig. 3, compressed air is introduced into the preform 10 from the opening 46 through the flow paths of the air introduction member 42 and the distal end core 44, and the compressed air is exhausted from the flow path between the fitting core 41 and the air introduction member 42.

In the cooling blow, when the compressed air is introduced from the opening 46 of the distal end core 44, the bottom portion 12 of the preform 10 is pushed by the compressed air from the state of Fig. 2 and is separated from the curved surface portion 45 of the distal end core 44. Then, as illustrated in Fig. 3, an outer peripheral surface (specifically, the body portion 13 and the bottom portion 12) of the preform 10 is pressed against a mold surface of the cavity mold 31. As a result, a gap through which the compressed air flows is formed between an inner peripheral surface of the preform 10 and the curved surface portion 45 of the distal end core 44.

Therefore, in the preform 10 during the cooling blow, a flow of the compressed air is generated from the bottom portion 12 side toward the neck portion 11 side in the preform 10, and the preform 10 is cooled from the inside by contact with the compressed air.

In addition, the preform 10 during the cooling blow continues to be in contact with the cavity mold 31 maintained at a predetermined temperature by receiving a pressure of the compressed air from the inside, and heat exchange (that is, cooling and temperature adjustment of the preform 10) is performed also between the preform 10 and the cavity mold 31. As a result, the temperature of the preform 10 is adjusted so as not to be equal to or lower than a temperature suitable for blow molding from the outside, and an uneven temperature that has occurred during injection molding is also reduced. Note that the shape of the preform 10 during the cooling blow is maintained by the cavity mold 31 and does not largely change.

After the temperature adjustment step, the transfer plate 28 of the conveyance mechanism 26 moves so as to rotate by a predetermined angle, and the preform 10 after the temperature adjustment held in the neck mold 27 is conveyed to the blow molding unit 23.

### (Step S103: Blow molding step)

Subsequently, blow molding of the container is performed in the blow molding unit 23.

First, the blow cavity mold is closed, the preform 10 is accommodated in a mold space, and the air introduction member (blow core) is lowered, whereby the air introduction member abuts on the neck portion 11 of the preform 10. Then, the preform 10 is stretched in the lateral axis direction by supplying blow air from the air introduction member while lowering the stretching rod (longitudinal axis stretching member) to hold the bottom portion 12 of the preform 10 from an inner surface and performing longitudinal axis stretching as necessary. As a result, the preform 10 is bulged and shaped so as to be in close contact with the mold space of the blow cavity mold, and is blow-molded in the container. Note that the bottom mold stands by at a lower position not in contact with the bottom portion of the preform 10 before the blow cavity mold is closed, and quickly rises to a molding position before or after the mold is closed.

### (Step S104: Container taking-out step)

When the blow molding is finished, the blow cavity mold and the bottom mold are opened. As a result, the container is movable from the blow molding unit 23.

Subsequently, the transfer plate 28 of the conveyance mechanism 26 moves so as to rotate by a predetermined angle, and the container is conveyed to the taking-out unit 24. In the taking-out unit 24, the neck portion of the container is released from the neck mold 27, and the container is taken out to the outside of the blow molding apparatus 20.

Thus, the series of steps of the blow molding method is completed. Thereafter, by moving the transfer plate 28 of the conveyance mechanism 26 so as to rotate by a predetermined angle, the steps of S101 to S104 described above are repeated. During operation of the blow molding apparatus 20, four sets of containers having a time difference of one step are manufactured in parallel.

Note that a time during which the transfer plate 28 is stopped is the same among the injection molding unit 21, the temperature adjustment unit 22, the blow molding unit 23, and the taking-out unit 24 due to the structure of the blow molding apparatus 20. Similarly, a conveyance time of the transfer plate 28 is the same among the units.

Hereinafter, operational effects of the present embodiment will be described.

In the temperature adjustment unit 22 of the present embodiment, the preform 10 at a high temperature having no cooling time (or a very short cooling time) in the injection mold is accommodated in the cavity mold 31, and the preform 10 is cooled and temperature-adjusted by cooling blow in which compressed air is blown into the preform 10 from the temperature adjustment core mold 32.

Before the cooling blow, the bottom portion 12 of the contracted preform 10 is in close contact with the curved surface portion 45 of the distal end core 44, and the bottom portion 12 of the preform 10 is cooled by the distal end core 44. As a result, the bottom portion 12 of the preform 10 can be cooled more than other portions before the cooling blow.

For example, in a case of forming a cup container or a wide-mouth container, when the temperature is adjusted such that the temperature of the entire preform does not become equal to or lower than a blow temperature, the bottom portion of the preform tends to be insufficiently cooled. When the bottom portion of the preform is insufficiently cooled, defects (appearance defects) such as thinning and remaining of transfer marks of the stretching rod may occur at a bottom portion of the container. In addition, when the preform is molded from a crystalline resin material such as PET, a defect of spherulite crystallization (whitening) due to insufficient cooling easily occurs at the bottom portion of the container. On the other hand, in the present embodiment, since the bottom portion 12 of the preform 10 is locally cooled by the temperature adjustment unit 22, the above-described defects can be avoided.

In addition, according to the present embodiment, by close contact of the bottom portion 12 of the contracted preform 10 with the curved surface portion 45 of the distal end core 44, irregular contraction of the preform 10 is suppressed before cooling blow, and the bottom portion 12 is locally cooled. Therefore, insufficient cooling of the preform 10 before the cooling blow and variation in adjustment of temperature distribution hardly occur.

During the cooling blow, the preform 10 in close contact with the distal end core 44 is pressed against the cavity mold 31 by compressed air. Then, an inner peripheral side of the preform 10 is cooled by the compressed air, and an outer peripheral side of the preform 10 is cooled and temperature-adjusted by contact with the cavity mold 31. The preform 10 is pressed against the cavity mold 31 by the cooling blow, whereby the contracted preform 10 can be restored to the shape or position before contraction, and cooling and adjustment of temperature distribution can be favorably performed on the preform 10.

In particular, the bottomed bowl-shaped preform 10 having a relatively shallow bottom shape is easily separated from the cavity mold 31 when being contracted both before the cooling blow and after the cooling blow, and it is relatively difficult to adjust temperature-adjust the preform 10. The temperature adjustment unit 22 of the present embodiment can favorably perform cooling and adjustment of temperature distribution on the bottomed bowl-shaped preform 10 as described above even when the preform is contracted (in particular, when the degree of contraction of the preform is large).

In addition, in the temperature adjustment unit 22 of the present embodiment, the distal end core 44 of the temperature adjustment core mold 32 is detachable, and the position of the curved surface portion 45 in the axial direction can be adjusted by disposing the spacer 47 therebetween. As a result, the degree of cooling of the preform 10 by contact with the distal end core 44 and a flow of compressed air between the preform 10 and the distal end core 44 can be adjusted. Therefore, cooling and adjustment of temperature distribution can be more appropriately performed on the preform 10.

The present invention is not limited to the above embodiment, and various improvements and design changes may be made without departing from the gist of the present invention.

In the above embodiment, the apparatus configuration of four-station type of the hot parison type has been described as an example of the blow molding apparatus. However, the blow molding apparatus of the present invention is not limited to the above embodiment, and may be applied to a blow molding apparatus other than the four-station type as long as the blow molding apparatus includes an injection molding unit, a temperature adjustment unit, and a blow molding unit.

In the above embodiment, the area of the curved surface portion 45 of the distal end core 44 may be reduced, and the distal end core 44 may be brought into pinpoint contact with a limited portion of the bottom portion of the preform 10. In addition, in the temperature adjustment core mold 32, a mechanism for maintaining the temperature of the distal end core 44 may be disposed.

In the above embodiment, the example in which the opening 46 is formed at a lower end portion of the distal end core 44 has been described. However, the position of the opening 46 of the distal end core 44 is not limited to the above embodiment, and for example, the opening 46 may be formed on an inclined surface of the distal end core 44 or the like.

In addition, the embodiment disclosed herein is to be considered in all respects as illustrative and not restrictive. The scope of the present invention is indicated not by the above description but by the claims, and is intended to include meanings equivalent to the claims and all modifications within the scope.

### Reference Signs List

- 10: Preform
- 11: Neck portion
- 12: Bottom portion
- 20: Blow molding apparatus
- 21: Injection molding unit
- 22: Temperature adjustment unit
- 23: Blow molding unit
- 31: Cavity mold
- 32: Temperature adjustment core mold
- 41: Fitting core
- 42: Air introduction member
- 44: Distal end core
- 45: Curved surface portion
- 46: Opening
- 47: Spacer

## Claims

1. A temperature adjustment mold for adjusting a temperature of an injection-molded bottomed resin preform, the temperature adjustment mold comprising:
a first mold that accommodates the preform inside and is in contact with an outer peripheral surface of the preform;
a second mold that is inserted into the preform and is in close contact with a neck portion of the preform; and
a third mold that is inserted into the preform integrally with the second mold and receives a bottom portion of the preform on a mold surface, wherein
the third mold has an opening for introducing compressed air into the preform, and
when the third mold is inserted into the preform, a distance from the mold surface of the third mold to the first mold is larger than a thickness of the preform.

2. The temperature adjustment mold according to claim 1, wherein
the third mold receives a bottom portion of the preform to be contracted at the mold surface before the compressed air is introduced, and
the first mold receives an outer peripheral surface of the preform pressed by the compressed air introduced from the opening.

3. The temperature adjustment mold according to claim 2, wherein
the compressed air introduced from the opening flows between the third mold and an inner peripheral surface of the preform pressed against the first mold.

4. The temperature adjustment mold according to any one of claims 1 to 3, further comprising
an adjustment unit that adjusts a distance between the third mold and the first mold.

5. The temperature adjustment mold according to claim 4, wherein
the third mold is detachably attached to a base portion fixed to the second mold, and
the adjustment unit is a spacer that adjusts an attachment position of the third mold with respect to the base portion.

6. A temperature adjustment method for adjusting a temperature of an injection-molded bottomed resin preform using a temperature adjustment mold,
the temperature adjustment mold including
a first mold that accommodates the preform inside and is in contact with an outer peripheral surface of the preform,
a second mold that is inserted into the preform and is in close contact with a neck portion of the preform, and
a third mold that is inserted into the preform integrally with the second mold and receives a bottom portion of the preform on a mold surface,
the third mold having an opening for introducing compressed air into the preform,
the temperature adjustment method comprising:
a first step of accommodating the preform in the first mold and inserting the second mold and the third mold into the preform;
a second step of receiving a bottom portion of the preform to be contracted at the mold surface of the third mold before the compressed air is introduced; and
a third step of introducing the compressed air from the opening of the third mold, pressing the outer peripheral surface of the preform against the first mold with the compressed air, and cooling the preform with the compressed air.

7. A resin container manufacturing apparatus comprising:
an injection molding unit that injection-mold a resin preform;
a temperature adjustment unit that has the temperature adjustment mold according to any one of claims 1 to 5 and adjusts a temperature of the preform manufactured by the injection molding unit; and
a blow molding unit that blow-molds the preform whose temperature has been adjusted and manufactures a resin container.
